# EUROPÄISCHE PATENTSCHRIFT

(11) **EP 1 308 358 B1**
(45) Veröffentlichungstag und Bekanntmachung des Hinweises auf die Patenterteilung: **22.10.2003**
(21) Anmeldenummer: 02023912.5
(22) Anmeldetag: 24.10.2002
(51) Int. Cl.: B60T 7/20, B60T 13/08

(54) **Rückfahrsystem für Auflaufbremsanlagen von Anhängern mit hydraulischer Bremskraftübertragungseinrichtung**
Hydraulic overrun braking system with a reverse motion system for trailers
Système de freinage hydraulique à inertie avec un système de marche arrière pour remorques

(30) Priorität: 01.11.2001 DE 20117647 U
(43) Veröffentlichungstag der Anmeldung: 07.05.2003
(73) Patentinhaber: Knott GmbH, D-83125 Eggstätt (DE)
(72) Erfinder: Knott, Valentin, 83254 Breitbrunn (DE); Hofstetter, Hermann, 83370 Seeon (DE); Strasser, Josef, 83254 Breitbrunn (DE)
(74) Vertreter: Bauer, Friedrich, Dipl.-Ing.

(56) Entgegenhaltungen:
- DE-A- 2 120 293
- GB-A- 2 326 205
- US-A- 3 880 263
- US-A- 5 622 241

## Beschreibung

Die Erfindung betrifft ein Rückfahrsystem für Auflaufbremsanlagen von Anhängern, mit einer hydraulischen Bremskraftübertragungseinrichtung, einer Steuerungseinrichtung und einem in der Bremskraftübertragungseinrichtung angeordneten, von der Steuerungseinrichtung angesteuerten Umschaltventil, das im Fall des Zurücksetzens des Anhängers die von den Radbremsen des Anhängers zurückströmende Hydraulikflüssigkeit zu einem Flüssigkeitsvorratsbehälter leitet.

Aus der DE 21 20 293 A und US 5 622 241 A sind Rückfahrsysteme für Auflaufbremsanlagen von Anhängern bekannt.

Für Anhänger, beispielsweise Caravan- oder Bootsanhänger, werden bekannterweise Auflaufbremsanlagen verwendet, die beim Bremsen des Zugfahrzeuges die Radbremsen des Anhängers aktivieren, indem die Zugstange des Anhängers gegen die Kraft einer Feder um einen gewissen Auflaufweg eingeschoben wird.

Damit beim normalen Zurücksetzen des Anhängers die Auflaufbremsanlage nicht aktiviert wird, sind neben mechanisch zu betätigenden Rückfahrsperren auch automatische Rückfahrsysteme für Auflaufbremsanlagen mit hydraulischer Bremskraftübertragungseinrichtung bekannt, bei denen das elektrische Signal der Rückfahrleuchte des Zugfahrzeuges verwendet wird, um das Bremsen der Räder beim Zurücksetzen des Anhängers zu verhindern. Dies erfolgt über ein elektromagnetisches Entlüftungsventil, das in die Übertragungseinrichtung der Auflaufbremsanlage eingebaut ist und durch den am Ausgang des Schalters für den Rückfahrscheinwerfer abgegriffenen elektrischen Strom betätigt wird. Dabei werden die Ausgangsleitungen des Hauptbremszylinders mit dem Flüssigkeitsvorratsbehälter verbunden.

Nachteilig ist hierbei, dass bei einem wiederholten Zurücksetzen des Anhängers relativ viel Bremsflüssigkeit in den Vorratsbehälter zurückgepumpt wird und die Gefahr besteht, dass der Hauptbremszylinder leergepumpt wird. Dies kann zur Folge haben, dass bei einem darauffolgenden Bremsvorgang nicht sofort genügend Bremsdruck an den Radbremsen zur Verfügung steht und daher die Bremsen nicht in der gewünschten Weise ansprechen.

Der Erfindung liegt von daher die Aufgabe zugrunde, ein Rückfahrsystem für Auflaufbremsanlagen gemäß dem Oberbegriff des Anspruches 1 zu schaffen, das auch nach wiederholtem Zurücksetzen des Anhängers ein einwandfreies Bremsverhalten gewährleistet.

Diese Aufgabe wird erfindungsgemäß durch die Merkmale des Anspruches 1 gelöst. Vorteilhafte Ausführungsformen der Erfindung sind in den weiteren Ansprüchen beschrieben.

Bei dem erfindungsgemäßen Rückfahrsystem ist in einer Rücklaufleitung der hydraulischen Bremskraftübertragungseinrichtung ein Restdruckventil vorgesehen, das im Fall des Zurücksetzens des Anhängers den Hydraulikdruck in der Bremskraftübertragungseinrichtung im Bereich der Radbremsen mindestens auf dem minimalen Druckwert hält, bei dem die Radbremsen gerade noch in Bremseingriff sind.

Das erfindungsgemäße Restdruckventil gewährleistet, dass auch beim Zurücksetzen des Anhängers ein vorbestimmter Restdruck in den Radbremsen zurückbleibt, der sicherstellt, dass die Bremsbeläge an den Reibflächen minimal angelegt bleiben, aber kaum mehr Bremsmoment erzeugen. Der Anhänger kann dadurch auch wiederholt zurückgeschoben werden, ohne dass mehr Flüssigkeitsvolumen als nötig in den Vorratsbehälter zurückfließt und der Hauptbremszylinder leergepumpt wird. Wird der Minimaldruchwert unterschritten, schließt das Restdruckventil.

Der vom Restdruckventil gehaltene Minimaldruckwert hängt von der hydraulischen Bremskraftübertragungseinrichtung ab, beträgt jedoch gemäß einer vorteilhaften Ausführungsform mindestens 1,5 bar, vorzugsweise 2 bis 3 bar.

Vorteilhafterweise besteht die Restdruckhalteeinrichtung aus einem in einer Rücklaufleitung angeordneten Restdruckventil, das bei Unterschreiten des Minimaldruckwertes schließt. Dieses Restdruckventil kann gemäß einer vorteilhaften Ausführungsform zwischen einem 4/2-Mehrwegeventil, das zwischen einer ersten, bei Vorwärtsfahrt eingenommenen Stellung, und einer zweiten, bei Rückwärtsfahrt eingenommenen Stellung umschaltbar ist, und dem Vorratsbehälter für die Bremsflüssigkeit angeordnet sein.

Gemäß einer besonders vorteilhaften Ausführungsform ist die Steuerungseinrichtung mit einer im Anhänger oder Zugfahrzeug angeordneten, die Rückwärtsfahrt erkennenden Bewegungserkennungseinrichtung gekoppelt und aktiviert das Umschaltventil bei Vorliegen eines von der Bewegungserkennungseinrichtung abgegebenen Rückfahrsignals. Bei der Bewegungserkennungseinrichtung kann es sich um Bewegungssensoren handeln, die an mindestens zwei Rädern des Anhängers oder Zugfahrzeuges angeordnet sind. Die Steuerungseinrichtung schaltet das Umschaltventil in diesem Fall erst dann von der Vorwärtsfahrtstellung in die Rückwärtsfahrtstellung, wenn an mindestens zwei Rädern eine Rückwärtsfahrt dedektiert wird. Dies erhöht die Funktionssicherheit des Rückfahrsystems.

Bei den Bewegungssensoren kann es sich beispielsweise um Polräder handeln, die bei Vorwärts- und Rückwärtsfahrt unterschiedliche Signalarten und/oder Signalfolgen abgeben. Auch andere Bewegungserkennungseinrichtungen sind möglich, beispielsweise solche, welche die Räder oder den Boden abtasten.

Besonders vorteilhaft ist es, wenn die Steuerungseinrichtung mit einer ein Rückfahrsignal in der Form eines Rückfahrleuchtensignals abgebenden Rückfahrsignalabgabeeinrichtung eines Zugfahrzeugs gekoppelt ist und das Umschaltventil bei Vorliegen des Rückfahrleuchtensignals aktiviert. Ein derartiges Rückfahrleuchtensignal, das vorzugsweise zusätzlich zu dem von der Bewegungserkennungseinrichtung abgegebenen Signal ausgewertet wird, erhöht die Funktionssicherheit des Rückfahrsystems.

Besonders vorteilhaft ist es dabei, wenn das Rückfahrsignal mit dem von der Bewegungserkennungseinrichtung abgegebenen Signal kombiniert und zusammen ausgewertet wird. Dies betrifft insbesondere den Fall, wenn der Anhänger an einer Gefällestrecke stark abgebremst wird und anschließend zurückgesetzt werden soll. Nach dem Bremsvorgang im Gefälle steht das Bremssystem aufgrund der anhaltenden Schubkraft des Anhängers auch im Stillstand unter hohem Druck, aufgrund dessen die Radbremsen zugespannt bleiben. Das Rückfahrsystem kann nun die Information des Rückfahrsignals mit der von der Bewegungserkennungseinrichtung abgegebenen Information, dass der Anhänger im Stillstand ist bzw. eine sehr geringe Geschwindigkeit hat, verknüpfen und daraufhin das Umschaltventil in die Rückwärtsfahrstellung frei schalten. Der Zuspanndruck in den Radbremsen baut sich dann über das Umschaltventil bis auf den Minimaldruckwert ab, bei dem die Radbremsen gerade noch in Bremseingriff sind. Sollte sich das Gespann dagegen trotz eines aktiven Rückfahrsignals mit mehr als einer vorbestimmten Geschwindigkeit vorwärts bewegen, wird das Umschaltventil in die Vorwärtsfahrstellung geschaltet, so dass der Anhänger wieder durch seine Hangabtriebskraft über die Auflaufbremsanlage gebremst wird. Dadurch ist gewährleistet, dass auch bei fehlerhaftem Rückfahrsignal keine Fehlsteuerung des Umschaltventils ausgelöst wird. Bewegt sich der Anhänger dagegen rückwärts, greift wieder die normale Auswertung der Bewegungserkennungseinrichtung ein, die dazu führt, dass die Steuerungseinrichtung das Umschaltventil in der Rückwärtsfahrstellung hält.

Gemäß einer vorteilhaften Ausführungsform ist die Steuerungseinrichtung mit einer Messeinrichtung für den Zugstangenauflaufweg und/oder mit einer Neigungsmesseinrichtung des Anhängers gekoppelt. Hierdurch kann die Steuerungseinrichtung erkennen, ob der Anhänger auf einer Gefällestrecke stark abgebremst wurde, so dass auch im Stillstand noch der volle Bremsdruck an den Radbremsen anliegt. Die von der Messeinrichtung für den Zugstangenauflaufweg und/oder Neigungsmesseinrichtung abgegebenen Signale können zusätzlich zur Steuerung des Rückfahrsystems verwendet werden, um auch im Gefälle ein optimales Verhalten des Rückfahrsystems zu erhalten.

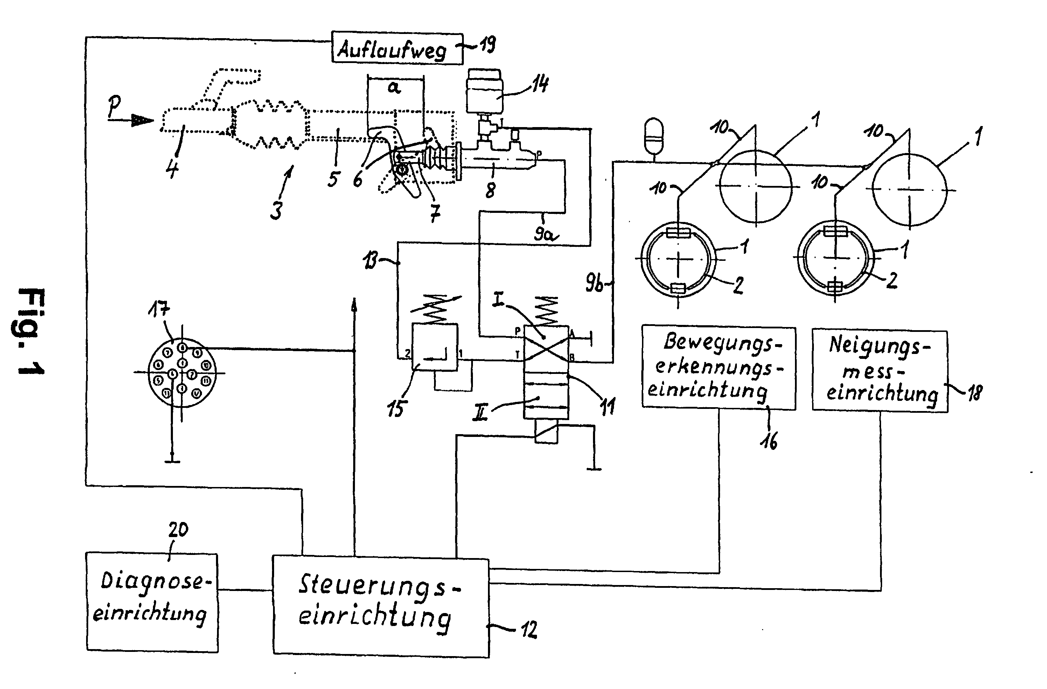

Die Erfindung wird nachfolgend anhand der Zeichnung beispielsweise näher erläutert. Die einzige Figur zeigt eine schematische Darstellung des erfindungsgemäßen Rückfahrsystems.

In der Figur ist ein Rückfahrsystem für eine Auflaufbremsanlage eines Anhängers gezeigt, von dem schematisch vier Räder 1 mit Radbremsen 2 dargestellt sind. Weiterhin ist gepunktet eine Deichsel 3 dargestellt, an dessen vorderem Ende eine Kugelkopfkupplung 4 vorgesehen ist. Die Kugelkopfkupplung 4 ist an einer nicht näher dargestellten Zugstange befestigt, die längsverschiebbar im hinteren Deichselkörper 5 gehaltert und an einer dort vorgesehenen Druckfeder in bekannter Weise abgestützt ist. Wird ein nicht dargestelltes Zugfahrzeug abgebremst, wirkt auf die Kugelkopfkupplung 4 eine Schubkraft P ein, wodurch die Zugstange um einen gewissen Auflaufweg in den hinteren Deichselkörper 5 eingeschoben wird. Das hintere Ende der Zugstange bewegt dabei einen Bremshebel 6 im Uhrzeigersinn, der wiederum einen Kolben 7 eines hydraulischen Hauptbremszylinders 8 in Längsrichtung nach hinten verschiebt. In der Figur ist der Bremshebel 6 mit durchgezogenen Linien in der vorderen, ungebremsten Stellung und mit gepunkteten Linien in der maximalen Bremsstellung gezeigt.

Der Hauptbremszylinder 8 ist über Bremsleitungen 9a, 9b und Zweigleitungen 10, die von der Bremsleitung 9b abzweigen, mit den hydraulisch betätigten Radbremsen 2, zum Beispiel Trommel- oder Scheibenbremsen, verbunden. Die Hydraulikverbindung zwischen den Bremsleitungen 9a, 9b wird mittels eines Umschaltventils in der Form eines 4/2-Wegventils 11 hergestellt bzw. unterbrochen. Dieses 4/2-Wegventil kann mittels einer elektronischen Steuerungseinrichtung 12 zwischen zwei Schaltstellungen I und II umgeschaltet werden. Die in der Figur dargestellte Schaltstellung I wird bei Vorwärtsfahrt des Anhängers geschaltet, während die Schaltstellung II bei Rückwärtsfahrt des Anhängers eingenommen wird.

In der dargestellten Schaltstellung I ist die Bremsleitung 9a mit der Bremsleitung 9b verbunden, so dass die Bremsflüssigkeit vom Hauptbremszylinder 8 zu den Radbremsen 2 und zurück fließen kann. Wird die Auflaufbremseinrichtung durch Bremsen des Zugfahrzeuges zusammengeschoben, wird Bremsflüssigkeit vom Hauptbremszylinder 8 zu den Radbremsen 2 gepumpt, wodurch die Radbremsen 2 aktiviert werden. Beendet das Zugfahrzeug den Bremsvorgang, so dass die Auflaufeinrichtung wieder auseinandergezogen wird und sich der Kolben 7 wieder nach vorn bewegen kann, fließt die Bremsflüssigkeit von den Radbremsen 2 über die Bremsleitungen 9b, 9a zum Hauptbremszylinder 8 in bekannter Weise zurück.

Erkennt die Steuerungseinrichtung 12 jedoch anhand nachfolgend noch näher beschriebener Signale, dass der Anhänger zurückgesetzt werden soll, schaltet die Steuerungseinrichtung 12 das Wegeventil 11 in die Schaltstellung II um. In dieser Schaltstellung ist die Verbindung zwischen den Bremsleitungen 9a, 9b unterbrochen und eine Verbindung zwischen der von den Radbremsen 2 kommenden Bremsleitung 9b und einer Rückleitung 13 vorhanden, die zurück zu einem Flüssigkeitsvorratsbehälter 14 führt. In der Rückleitung 13 befindet sich eine Restdruckhalteeinrichtung in der Form eines Restdruckventils 15, welches den Rückfluss der Bremsflüssigkeit durch die Rückleitung 13 hindurch nur dann freigibt, wenn der Druck innerhalb der Rückleitung 13 und damit innerhalb der Bremsleitung 9b oberhalb eines vorher eingestellten Minimaldruckwertes liegt. Dieser Minimaldruckwert entspricht zweckmäßigerweise demjenigen Druck, bei dem die Bremsbeläge gerade noch an den Reibflächen der Bremse anliegen, aber kaum mehr Bremsmoment erzeugen. Fließt dagegen aufgrund der Bewegung, welche die Bremselemente beim Lösen der Radbremsen 2 ausführen, so viel Bremsflüssigkeit zurück in den Flüssigkeitsvorratsbehälter 14, dass der Flüssigkeitsdruck in der Rückleitung 13 den Minimaldruckwert unterschreitet, schließt das Restdruckventil 15, so dass das weitere Zurückfließen der Bremsflüssigkeit unterbunden wird. Ein unerwünschter Volumenverlust in der Bremsleitung 9b wird dadurch vermieden.

Um die Vorwärts- bzw. Rückwärtsfahrt des Anhängers erkennen zu können, ist die Steuerungseinrichtung 12 mit einer Bewegungserkennungseinrichtung 16 und einer am Zugfahrzeug angeordneten Anschlussbuchse 17 elektrisch verbunden, an welcher das beim Rückwärtsfahren des Zugfahrzeuges abgegebene Rückfahrleuchtensignal abgegriffen wird. Es ist auch ohne weiteres möglich, dass die Steuerungseinrichtung 12 nur mit der Bewegungserkennungseinrichtung 16 oder nur mit der das Rückfahrleuchtensignal übertragenden Anschlussbuchse 17 verbunden ist.

Die Bewegungserkennungseinrichtung 16 kann sich entweder am Anhänger oder am Zugfahrzeug befinden und kann beispielsweise zwei Bewegungssensoren umfassen, welche jeweils ein für die Drehrichtung der Räder 1 charakteristisches Signal abgeben.

Ein Vorteil des beschriebenen Rückfahrsystems besteht darin, dass die Funktionsfähigkeit der Auflaufbremsanlage in Vorwärtsfahrt auch bei Ausfall des Wegeventils 11, des Restdruckventils 15 und/oder der gesamten Steuerungseinrichtung 12 noch erhalten bleibt. Weiterhin kann auch eine bekannte mechanische Sperrklinke an der Auflaufbremsanlage vorgesehen werden, die bei Rückwärtsfahrt eingelegt wird und bei Ausfall des automatischen Rückfahrsystems ein ungebremstes Zurücksetzen des Anhängers ermöglicht.

Zusätzlich kann, wie dargestellt, die Steuerungseinrichtung 12 optional mit einer Neigungsmesseinrichtung 18 verbunden sein. Die Neigungsmesseinrichtung 18 misst die Neigung des Anhängers und kann in dem Fall, dass der Anhänger in einem starken Gefälle abgebremst wird, eine entsprechende Information an die Steuerungseinrichtung 12 übermitteln. Diese Information kann beispielsweise verwendet werden, um das Steuerungsverhalten der Steuerungseinrichtung 12 zu beeinflussen.

Weiterhin kann die Steuerungseinrichtung 12 optional auch mit einer Messeinrichtung 19 für den Zugstangenauflaufweg elektrisch gekoppelt sein, um entsprechende Informationen über den Auflaufweg zu erhalten. Diese Informationen dienen ebenfalls dazu, das Steuerungsverhalten der Steuerungseinrichtung 12 zu optimieren.

In der Zeichnung ist weiterhin eine Diagnoseeinrichtung 20 dargestellt, die elektrisch mit der Steuerungseinrichtung 12 verbunden ist und eine Funktionskontrolle der Steuerungseinrichtung 12 ermöglicht.

## Patentansprüche

1. Rückfahrsystem für Auflaufbremsanlagen von Anhängern, mit einer hydraulischen Bremskraftübertragungseinrichtung, einer Steuerungseinrichtung (12) und einem in der Bremskraftübertragungseinrichtung angeordneten, von der Steuerungseinrichtung (12) angesteuerten Umschaltventil, das im Fall des Zurücksetzens des Anhängers die von den Radbremsen (2) des Anhängers zurückströmende Hydraulikflüssigkeit zu einem Flüssigkeitsvorratsbehälter (14) leitet, **dadurch gekennzeichnet, dass** in einer Rücklaufleitung (13) der hydraulischen Bremskraftübertragungseinrichtung ein Restdruckhaltventil (15) vorgesehen ist, das im Fall des Zurücksetzens des Anhängers den Hydraulikdruck in der Bremskraftübertragungseinrichtung im Bereich der Radbremsen (2) zumindest auf dem minimalen Druckwert hält, bei dem die Radbremsen (2) gerade noch in Bremseingriff sind.

2. Rückfahrsystem nach Anspruch 1, **dadurch gekennzeichnet, dass** der vom Restdruckventil (15) gehaltene Minimaldruckwert mindestens 1,5 bar, vorzugsweise 2 bis 3 bar, beträgt.

3. Rückfahrsystem nach einem der vorhergehenden Ansprüche, **dadurch gekennzeichnet, dass** das Umschaltventil ein 4/2-Mehrwegeventil (11)umfasst.

4. Rückfahrsystem nach Anspruch 3, **dadurch gekennzeichnet, dass** das Restdruckventil (15) zwischen dem Mehrwegeventil (11) und dem Flüssigkeitsvorratsbehälter (14) angeordnet ist.

5. Rückfahrsystem nach einem der vorhergehenden Ansprüche, **dadurch gekennzeichnet, dass** die Steuerungseinrichtung (12) mit einer im Anhänger oder Zugfahrzeug angeordneten, die Rückwärtsfahrt erkennenden Bewegungserkennungseinrichtung (16) gekoppelt ist und das Umschaltventil bei Vorliegen eines von der Bewegungserkennungseinrichtung (16) abgegebenen Rückfahrsignals aktiviert.

6. Rückfahrsystem nach Anspruch 5, **dadurch gekennzeichnet, dass** die Bewegungserkennungseinrichtung (16) aus Bewegungssensoren besteht, die an mindestens zwei Rädern (11) des Anhängers oder Zugfahrzeuges angeordnet sind.

7. Rückfahrsystem nach einem der vorhergehenden Ansprüche, **dadurch gekennzeichnet, dass** die Steuerungseinrichtung (12) mit einer ein Rückfahrsignal abgebenden Rückfahrsignalabgabeeinrichtung eines Zugfahrzeuges gekoppelt ist und das Umschaltventil bei Vorliegen des Rückfahrsignals aktiviert.

8. Rückfahrsystem nach Anspruch 7, **dadurch gekennzeichnet, dass** das Rückfahrsignal aus dem Rückfahrleuchtensignal besteht.

9. Rückfahrsystem nach einem der Ansprüche 5 bis 8, **dadurch gekennzeichnet, dass** die Steuerungseinrichtung (12) mit einer Messeinrichtung (19) für den Zugstangenauflaufweg gekoppelt ist.

10. Rückfahrsystem nach einem der Ansprüche 5 bis 9, **dadurch gekennzeichnet, dass** die Steuerungseinrichtung (12) mit einer Neigungsmesseinrichtung (18) des Anhängers gekoppelt ist.

## Claims

1. Reversing system for overrun brake systems of trailers, with a hydraulic brake-force transmission device, a control device (12) and a changeover valve, which is arranged in the brake-force transmission device, is controlled by the control device (12) and, in the case where the trailer is backed, directs the hydraulic fluid flowing back from the wheel brakes (2) of the trailer to a fluid reservoir (14), **characterized in that** a return line (13) of the hydraulic brake-force transmission device is provided with a residual-pressure holding valve (15) which, in the case where the trailer is backed, holds the hydraulic pressure in the brake-force transmission device in the region of the wheel brakes (2) at least at the minimum pressure value, at which the wheel brakes (2) are still just in braking engagement.

2. Reversing system according to Claim 1, **characterized in that** the minimum pressure value held by the residual-pressure valve (15) is at least 1.5 bar, preferably 2 to 3 bar.

3. Reversing system according to one of the preceding claims, **characterized in that** the changeover valve comprises a 4/2-way multi-way valve (11).

4. Reversing system according to Claim 3, **characterized in that** the residual-pressure valve (15) is arranged between the multi-way valve (11) and the fluid reservoir (14).

5. Reversing system according to one of the preceding claims, **characterized in that** the control device (12) is coupled to a motion detection device (16), which is arranged in the trailer or the tractor vehicle and detects reversing, and activates the changeover valve when a reversing signal emitted by the motion detection device (16) is present.

6. Reversing system according to Claim 5, **characterized in that** the motion detection device (16) comprises motion sensors, which are arranged at at least two wheels (1) of the trailer or tractor vehicle.

7. Reversing system according to one of the preceding claims, **characterized in that** the control device (12) is coupled to a reversing-signal emission device of a tractor vehicle, which emits a reversing signal, and activates the changeover valve when the reversing signal is present.

8. Reversing system according to Claim 7, **characterized in that** the reversing signal comprises a reversing-light signal.

9. Reversing system according to one of Claims 5 to 8, **characterized in that** the control device (12) is coupled to a measuring device (19) for the drawbar overrun path.

10. Reversing system according to one of Claims 5 to 9, **characterized in that** the control device (12) is coupled to an inclination-measuring device (18) of the trailer.

## Revendications

1. Système de recul pour des installations de frein à inertie de remorques, comportant un dispositif hydraulique de transmission de force de freinage, un dispositif de commande (12) et une valve de commutation agencée dans le dispositif de transmission de force de freinage et pilotée par le dispositif de commande (12), valve qui, en cas de recul de la remorque, mène le liquide hydraulique retournant des freins de roue (2) de la remorque jusqu'à un réservoir à liquide (14), **caractérisé en ce qu'**il est prévu dans une conduite de retour (13) du dispositif hydraulique de transmission de force de freinage une valve de maintien de pression résiduelle (15) qui, en cas de recul de la remorque, maintient la pression hydraulique dans le dispositif de transmission de force de freinage dans la zone des freins de roue (2) au moins à la valeur de pression minimale à laquelle les freins de roue (2) sont tout juste encore en engagement de freinage.

2. Système de recul selon la revendication 1, **caractérisé en ce que** la valeur de pression minimale maintenue par la valve de pression résiduelle (15) est d'au moins 1,5 bar, de préférence de 2 à 3 bar.

3. Système de recul selon l'une des revendications précédentes, **caractérisé en ce que** la valve de commutation comprend un distributeur à 4 voies/2 positions (11).

4. Système de recul selon la revendication 3, **caractérisé en ce que** la valve de pression résiduelle (15) est agencée entre le distributeur (11) et le réservoir à liquide (14).

5. Système de recul selon l'une des revendications précédentes, **caractérisé en ce que** le dispositif de commande (12) est couplé avec un dispositif de reconnaissance de mouvement (16) qui est agencé dans la remorque ou dans le véhicule tracteur et qui reconnaît la marche arrière, et active la valve de commutation en présence d'un signal de recul émis par le dispositif de reconnaissance de mouvement (16).

6. Système de recul selon la revendication 5, **caractérisé en ce que** le dispositif de reconnaissance de mouvement (16) est constitué par des détecteurs de mouvement qui sont agencés sur au moins deux roues (1) de la remorque ou du véhicule tracteur.

7. Système de recul selon l'une des revendications précédentes, **caractérisé en ce que** le dispositif de commande (12) est couplé avec un dispositif d'émission de signal de recul d'un véhicule tracteur, émettant un signal de recul, et active la valve de commutation en présence du signal de recul.

8. Système de recul selon la revendication 7, **caractérisé en ce que** le signal de recul est constitué par le signal de feu de recul.

9. Système de recul selon l'une des revendications 5 à 8, **caractérisé en ce que** le dispositif de commande (12) est couplé à un dispositif de mesure (19) pour la course de compression de la barre d'attelage.

10. Système de recul selon l'une des revendications 5 à 9, **caractérisé en ce que** le dispositif de commande (12) est couplé avec un dispositif inclinomètre (18) de la remorque.
